# EUROPÄISCHE PATENTSCHRIFT

(11) **EP 0 620 960 B1**
(45) Veröffentlichungstag und Bekanntmachung des Hinweises auf die Patenterteilung: **10.03.1999**
(21) Anmeldenummer: 93924588.2
(22) Anmeldetag: 05.11.1993
(51) Int. Cl.: H04N 1/419

(54) **VERFAHREN ZUR CODIERUNG UND ÜBERTRAGUNG VON INFORMATION**
INFORMATION CODING AND TRANSMISSION PROCESS
PROCEDE DE CODAGE ET DE TRANSMISSION D'INFORMATIONS

(30) Priorität: 06.11.1992 DE 4237547; 23.12.1992 DE 4243899; 11.08.1993 DE 4326997
(43) Veröffentlichungstag der Anmeldung: 26.10.1994
(73) Patentinhaber: Dirr, Josef, D-81679 München (DE)
(72) Erfinder: Dirr, Josef, D-81679 München (DE)
(86) Internationale Anmeldenummer: EP9303088
(87) Internationale Veröffentlichungsnummer: WO9400973

(56) Entgegenhaltungen:
- WO-A-93/04572
- DE-A- 4 028 927
- US-A- 4 086 430
- PATENT ABSTRACTS OF JAPAN Bd. 016, Nr. 146 (E-1188) 10 April 1992 & JP,A,04 003 579 (RICOH CO LTD) 08 Januar 1992

## Beschreibung

### Technisches Gebiet:

Die vorliegende Erfindung befasst sich mit einem Verfahren zur Codierung und Übertragung von Information, beispielsweise von Vorlagen und Bildern Daten und Sprache. In den Beispielen werden insbesondere Telefax und das Farbfernsehen angeführt.

### Stand der Technik:

Bei Telefax sollen auch Fotos und Vorlagen mit unterschiedlichen Grauwerten codiert und übertragen werden. Hierfür wurden die abgegriffenen Spannungswerte der Bildpunkte in z.B. 16 Stufen unterteilt und nach dem Ditherverfahren in 16 weiss/schwarze Bildpunkte,quadratisch angeordnet,auf)geteilt. 16 weisse Bildpunkte entsprechen dabei dem Grauwert 1 und 16 schwarze Bildpunkte dem Grauwert 16. Je nach Grauwert,also Spannungswert, werden dann die Bildpunkte in mehr oder weniger dichte Muster von weissen und schwarzen Bildpunkten aufgeteilt. Für das Auge erscheint dies immer als hellerer oder dunklerer Grauton. Die Übertragung dieser Quadrate ist sehr zeitraubend und aufwendig. Die Übertragung über den Stromweg erfolgt dann vielfach mit Hilfe der Phasendifferenz- bezw.Amplituden/Phasendifferenzmodulation.

Farbige Photos und Bilder z.B. auch solche nach dem Still-Video-System von Canon, werden vielfach auf den bekannten Prinzipien der Codierung und Übertragung wie beim Farbfernsehen, z.B. PAL, durchgeführt. Beim NTSC-System entstehen dabei erhebliche Farbfehler, die nur mit erheblichem Aufwand beim PAL-System beseitigt wurden. Ausserdem entstehen bei allen Systemen die unter Cross Luminance und Cross Colour bekannten Fehler. Durch die Art der Codierung und Übertragung sind noch Verzögerungsglieder zur Anpassung der Laufzeiten erforderlich.

### Zusammenfassung der Erfindung:

Die Erfindung macht sich nun zur Aufgabe, eine solche Codierung und Übertragung der Informationen zu schaffen, bei der die Übertragungszeit verkürzt wird, oder/und die Bandbreite reduziert wird. Diese Aufgabe wird durch die Merkmale des Anspruches 1 gelöst. Vorteilhafte Weiterbildungen der Erfindung sind in den Unteransprüchen 2-5 gekennzeichnet.

### Kurze Beschreibung der Zeichnungen:

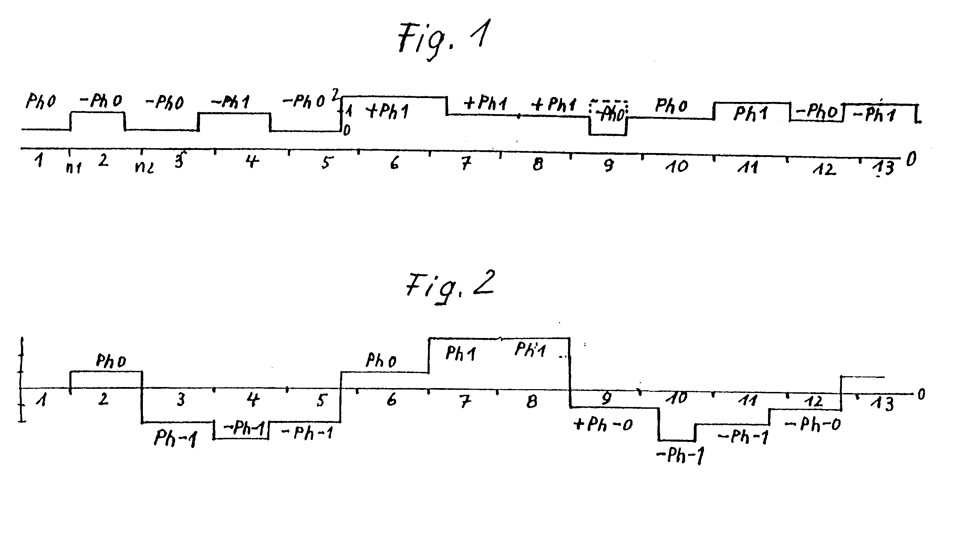

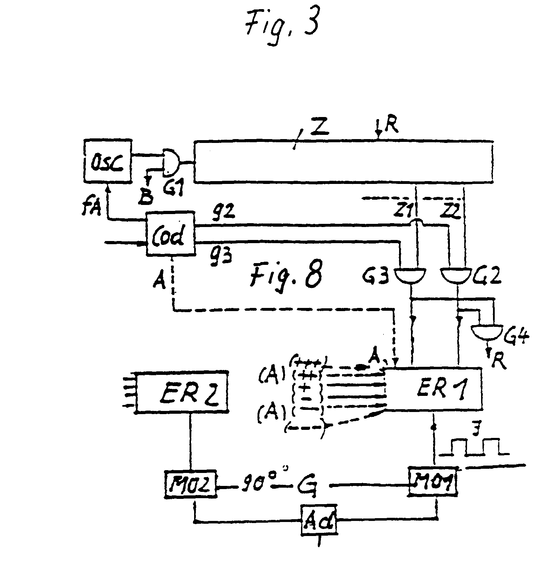

Fig.1 und 2 ein unipolarer und bipolarer Phasen/Amplitudencode, und Fig.3 eine Prinzipschaltung für die Erzeugung des Phasen/Amplitudencodes.

### Wege zur Ausführung der Erfindung:

In der Fig.1 ist ein unipolarer Phasen/Amplitudencode dargestellt. Er besteht aus den 3 Phasenstufen Ph,-Ph,+Ph und aus 2 Amplitudenstufen 0,1 Die 3. Amplitudenstufe ist keine aktive, sondern eine Redundanzstufe zur Kennzeichnung einer Phasenzustandsänderung. 1 bis 13 sind die Takte, der Abstand derselben entspricht der normalen Periodendauer bezw.Phase Ph, diese ist mit n bezeichnet. Die Phase von -Ph sind 3 Einheiten und die von +Ph 5 Einheiten, die Normalphase sind 4 Einheiten. Der Code ist in Form von Treppensignalen dargestellt. Die Codierung beginnt im Beispiel mit Ph0, also Normalphase/Amplitude 0. Die folgende Codierung ist -PhO, Amplitude 0. Da keine Kennzeichnung für die Phasenänderung vorhanden ist, muss eine Amplitudenänderung diese anzeigen, also sozusagen wird die Redundanzstufe herangezogen. Diese Änderung wird durch die Amplitudenstufe 1 markiert. Würde z.B. gleichzeitig die Amplitudenstufe 1 vorgesehen, so müsste dies durch eine Änderung von 2 Amplitudenstufen gekennzeichnet werden.Da -Ph durch 3 Einheiten markiert wird,muss dies auch wieder markiert werden, d.h. in Abhängigkeit ob das folgende Codeelement die Amplitudenstufe 0 oder 1 hat, wird auf die Amplitudenstufe 0 oder 2 geschaltet. Im Beispiel hat das folgende Codeelement dieselbe Phase -Ph und denselben Amplitudenwert 0. Wenn also die normale Periodendauer mit 4 Einheiten beibehalten wird, bedeutet dies, dass die Phasenverschiebung von -Ph weiterhin gilt. Das nächste Codeelement hat die Phase -Ph und die Amplitude 1, also -Phl, d.h. die Amplitudenänderung geht von 0 auf 1 und da sich die Phase nicht ändert,ist die Periodendauer wieder 4 Einheiten.

Beim nächsten Codeelement ändert sich nur die Amplitudenstufe von 1 auf 0 die Phase ist dieselbe. Beim folgenden Codeelement ändert sich die Phase von -Ph auf +Ph und die Amplitude von 0 auf 1. Dies wird gekennzeichnet durch 2 Amplitudenstufen und durch 6 Einheiten und zwar + 1 Einheit zur Erlangung der Normalphase und eine Einheit zur Erlangung der + Phase.

Würde man nur eine Amplitudenstufe erhöhen, so würde man damit nur die Amplitudenstufe 0 kennzeichnen.Da die nächsten beiden Codeelemente die +Ph Phase und die Amplitudenstufe 1 beibehalten, ist nach den 6 Einheiten nur eine Amplitudenänderung auf 1 erforderlich. Das folgende Codeelement ist -Ph0. Von der +Ph-Phase ist - Ph um 2 Einheiten entfernt, die Änderung darf daher nur 2 Einheiten betragen.Diesmal wird mit der Amplitudenstufenänderung auf 0 gleichzeitig auch die Phasenänderung angezeigt. Bei einer Amplitudenänderung auf 1 würde die gestrichelte Linie gelten.

Das nächste Codeelement ist Ph0,d.h. es muss 5 Einheiten lang sein. Eine Änderung des Amplitudenwertes erfolgt nicht.Bei einer Amplitudenänderung auf 1 müsste die Amplitudenstufe 2 angeschaltet werden. Dies ist beim nächsten Codeelement Phl der Fall. Beim Empfänger müssen natürlich die Einheiten n mit dem Sender Synchronisiert werden. Als Impulse können natürlich auch Wechselstromimpulse vorgesehen werden. Auf die Erzeugung dieser Treppensignale wird bei der Beschreibung der Fig.3 eingegangen. Bei einer QAM-Übertragung ist es zweckmässig, die in Fig.1 dargestellt ten Takte 1-13 bezw. nl bis n13 bei beiden Treppensignalfolgen zu synchonisieren. Sind die Trägerfrequenzen ein Vielfaches der Taktfrequenz, ist zwischen Änderungen immer Zeit für Einschwingvorgänge.

Welche Kombinationen sind nun durch diesen Code möglich. 2 verwertbare Amplitudenstufen und 3 Phasenstufen stehen je Codeelement zur Verfügung. Die Basis ist 6. Bei 2 Stellen sind 6 hoch 2 = 36 Kombinationen, bei 3 Stellen 6 hoch 3 = 216 Kombinationen usw. möglich. Man kann nun 2 solcher Kanäle für die Codierung vorsehen und diese dann 2 gleichfrequenten Trägern, die gegeneinander um 90° phasenverschoben sind, aufmodulieren. Für die Übertragung werden die beiden Träger dann addiert. Für die Auswertung auf der Empfangsseite ist dann eine Bezugsphase , wie beim Farbfernsehen der Burst, erforderlich.

In der Fig.2 ist eine bipolare Anordnung der Treppensignale dargestellt. sodass die Stufenzahl wesentlich erhöht wird. Die Amplitudenstufen sind dann mit 0/-0, 1/-1 bezeichnet. Allerdings können bei einer QAM übertragung von 2 derartigen Kanälen Phasensprünge von über 300° vorkommen.

In der Fig.3 ist die Prinzipschaltung für die Erzeugung von Codeelemten, wie sie in der Fig.1 verwendet werden, dargestellt. Im Zählglied Z werden die Periodendauern in Verbindung mit dem Codierer Cod festgelegt. Die grösste vorkommende Periodendauer tritt bei Takt 6 auf. Hierfür ist der Ausgang Z2 vorgesehen. Der Einfachheit halber werden für die 6 Einheiten 60 Ausgänge verwendet. Im Codierer Cod wird immer festgelegt welcher Ausgang aufgrund des Codes markiert werden muss. Bei 6 Einheiten wird an g2 ein solches Potential angelegt, dass in Zusammenwirken mit dem Z2-Potential das Gatter G2 wirksam wird. Damit wird dann am elektronischen Relais ER1 das Ende der 6 Einheiten markiert. Vom Codierer wird zugleich über A zu ER1 ein Kennzeichen am Impulsanfang gegeben, dass der Impuls 6 Einheiten die Amplitude 2 (A)+++ erhält. Im Beispiel sind dann einer Einheit 10 Ausgänge am Zählglied zugeordnet. Wenn mehrere gleiche Codeelemente in der Folge vorkommen, so wird dies vom Codierer über A unmittelbar zu ER1 gegeben, sodass dann keine Amplitudenänderung durchgeführt wird. Bei 5 Einheiten wird vom Codierer Cod über g3 das Gatter G3 wirksam geschaltet, d.h. der Treppenimpuls wird dann verändert. Mit dem 1. Steuerimpuls am Zählglied nach der Rückschaltung, die jeweils über das Gatter 4, R erfolgt, wird über A für den jetzt beginnenden Treppenimpuls die jeweilige Amplitude an ER1 markiert. Auf diese Weise ist es möglich über die Zählgliedausgänge alle Periodendauern in Verbindung mit dem Codierer zu steuern, während die Steuerung der Amplitudengrösse unmittelbar vom Codierer am elektronischen Relais ER1 vorgenommen wird. Sollen 2 Treppenimpulsfolgen nach der Fig.1 z.B. auf der Basis der QAM übertragem werden, so ist eine 2. Schaltung mit ER2 erforderlich. Die am Ausgang der ER-Relais auftretenden Treppenimpulsfolgen werden dann den Modulatoren M01 und M02 zugeführt. Über den Generator G erhalten sie dann die Trägerwechselströme , der eine um 90° phasenverschoben. Vom Modulator gehen beide an den Addierer und als Summenwechselstrom auf den Übertragungsweg.

## Patentansprüche

1. Verfahren zur Codierung und Übertragung von Information, wie Bilder und/oder Daten mittels einer mehrwertigen Phasencodierung, bei dem als Phasenstufen unterschiedliche Phasenlagen von Impulsen (-Ph,Ph,+Ph in Fig.1) zu einer vorbestimmten Phasenlage von Vergleichstaktimpulsen (n1,n2,...in Fig.1) vorgesehen werden, wobei eine Änderung der Phasenlagen dabei durch Verkleinerung oder Vergrösserung der Impulsdauer gegenüber den Vergleichstaktimpulsen erfolgt und bei dem die jeweilige Impulsdauer durch eine vorbestimmte Zahl von Perioden mindestens eines Wechselstromes einer Frequenz repräsentiert wird, wobei der jeweils folgende Impuls durch eine Amplitudenänderung markiert wird.

2. Verfahren nach Patentanspruch 1, bei dem als Phasenstufen die Vergleichsphasenlage und zu dieser voreilende und nacheilende Impulsphasenlagen vorgesehen werden (Fig.1, -Ph,+Ph).

3. Verfahren nach den Patentansprüchen 1 und 2, bei dem bei gleicher Phasenlage des oder der nachfolgenden Impulse deren Impulsdauer gleich der Impulsdauer der Vergleichsimpulse ist.

4. Verfahren nach den Patentansprüchen 1 bis 3, wobei eine Mehrung der Stufen in der Weise erfolgt, dass die Impulse entweder auf zwei 90° phasenverschobene und nachfolgend addierte Wechselströme verteilt und in dieser Form übertragen werden, oder dass die Impulse auf zwei Wechselströme aufgeteilt werden, die auf zwei um 90° phasenverschobene Träger aufmoduliert werden und die Übertragung durch die Addition der Träger erfolgt.

5. Verfahren nach den Patentansprüchen 1 bis 4, bei dem zur Phasencodierung zusätzlich eine Amplitudencodierung vorgesehen wird.

## Claims

1. A process for encoding and transmitting information such as images and/or data by means of multi-value phase encoding, wherein different phase positions of pulses (-Ph, Ph, +Ph in Figure 1) in relation to a predetermined phase position of comparison clock pulses (n1, n2, ... in Figure 1) are provided as phase steps, a change in the phase positions in that case being effected by reducing or increasing the pulse duration with respect to the comparison clock pulses, and wherein the respective pulse duration is represented by a predetermined number of periods of at least one alternating current of a frequency, the respectively following pulse being marked by an amplitude change.

2. A process according to claim 1 wherein the comparison phase position and pulse phase positions leading and lagging in relation thereto are provided as phase steps (Figure 1, -Ph, +Ph).

3. A process according to claims 1 and 2 wherein, with the same phase position in respect of the subsequent pulse or pulses, the pulse duration thereof is equal to the pulse duration of the comparison pulses.

4. A process according to claims 1 to 3 wherein an increase in the steps is effected in that the steps are either distributed on to two alternating currents which are phase-shifted through 90° and subsequently added and transmitted in that form, or the pulses are distributed on to two alternating currents which are modulated on to two carriers which are phase-shifted through 90°, and transmission is effected by addition of the carriers.

5. A process according to claims 1 to 4 wherein amplitude encoding is provided in addition to the phase encoding.

## Revendications

1. Procédé de codage et de transmission d'informations, telles que des images et/ou des données, au moyen d'un codage de phase plurivalent, dans lequel en tant qu'étages de phase sont prévues des positions de phase variables d'impulsions (-Ph, Ph, +Ph dans la Fig. 1) par rapport à une position de phase de consigne d'impulsions de rythme de comparaison (n1, n2... dans la Fig. 1) où une modification des positions de phase a alors lieu par la diminution ou par l'augmentation de la durée d'impulsion par rapport aux impulsions de rythme de comparaison et où la durée d'impulsion momentanée est représentée par un nombre de consigne de périodes d'au moins un courant alternatif d'une fréquence, et où l'impulsion immédiatement suivante est marquée par une variation d'amplitude.

2. Procédé suivant la revendication 1, dans lequel sont prévues, en tant qu'étages de phase, la position de phase de comparaison et le position de phase qui la précède ainsi que la position de phase qui lui succède (Fig. 1, -Ph, + Ph).

3. Procédé suivant les revendications 1 et 2, dans lequel, pour une même position de phase de l'impulsion suivante ou des impulsions suivantes, leur durée d'impulsion est égale à la durée d'impulsion des impulsions de comparaison.

4. Procédé suivant les revendications de 1 à 3, dans lequel une multiplication des étages a lieu de manière telle que soit les impulsions sont réparties sur deux courants alternatifs déphasés de 90° et par la suite additionnées et sont transmises sous cette forme, soit les impulsions sont réparties sur deux courants alternatifs, qui sont modulés sur deux porteuses déphasées de 90° et où la transmission a lieu par addition des porteuses.

5. Procédé suivant les revendications de 1 à 4, dans lequel un codage d'amplitude est prévu en addition au codage de phase.
